# EUROPÄISCHE PATENTSCHRIFT

(11) **EP 0 769 840 B1**
(45) Veröffentlichungstag und Bekanntmachung des Hinweises auf die Patenterteilung: **12.01.2000**
(21) Anmeldenummer: 96115018.2
(22) Anmeldetag: 19.09.1996
(51) Int. Cl.: H02K 11/04, H02K 29/08, H02K 3/50

(54) **Kollektorloser Elektromotor**
Brushless electric motor
Moteur électrique sans balais

(30) Priorität: 21.10.1995 DE 29516656 U
(43) Veröffentlichungstag der Anmeldung: 23.04.1997
(73) Patentinhaber: ebm Werke GmbH & Co., 74673 Mulfingen (DE)
(72) Erfinder: Best, Dieter, 74653 Ingelfingen (DE); Lipp, Helmut, 74677 Hohebach (DE); Bamberger, Bernhard, 97922 Lauda-Unterbalbach (DE); Jakob, Franz, 74673 Mulfingen-Zaisenhausen (DE)
(74) Vertreter: Zapf, Christoph, Dipl.-Ing.

(56) Entgegenhaltungen:
- WO-A-95/06971
- DE-A- 3 842 588
- FR-A- 2 153 307
- MOTOROLA TECHNICAL DEVELOPMENTS, Bd. 9, August 1989, Seite 60/61 XP000053788 GROMALA R ET AL: "HIGH WATTAGE POWER DEVICE HEAT SINK AND RETAINER"

## Beschreibung

Die vorliegende Erfindung betrifft einen kollektorlosen Gleichstromaußenläufermotor, bestehend aus einem an einem Statorflansch befestigten Stator mit Statorwicklungen, einem den Stator auf seiner dem Statorflansch abgekehrten Seite umschließenden Außenläufer sowie einem zwischen dem Statorflansch und dem Außenläufer angeordneten Elektronikmodul mit einer elektronischen, die Statorwicklungen ansteuernden Schaltungsanordnung mit einer flanschseitig dem Stator zugekehrt angeordneten elektronische Bauelemente tragenden Leiterplatte sowie räumlich getrennt von der Leiterplatte angeordneten, mit dieser elektrisch leitend verbundenen Leistungshalbleitern, wobei der Statorflansch einen sich in axialer Richtung erstrekenden Umfangsrand aufweist.

Bei kollektorlosen Gleichstrommotoren wird eine Kommutierung der Statorwicklungsströme von Leistungshalbleitern, z.B. Leistungstransistoren, vorgenommen. Dieser Kommutierungsvorgang, d. h. das Ein- und Ausschalten der Wicklungsströme, wird durch mindestens einen Hallgenerator gesteuert, der die jeweilige Winkelstellung des Läufers erfaßt. Insbesondere bei Motoren mittlerer bis höherer Leistung entsteht in den Leistungshalbleitern eine verlustbedingte Wärme, so daß die Leistungshalbleiter gekühlt werden müssen, um deren Zerstörung bei einer zu großen Wärmeentwicklung zu vermeiden.

Aus der DE 38 42 588 C2 ist ein gattungsgemäßer kollektorloser Gleichstromaußenläufermotor bekannt, der bereits vielen Ansprüchen gerecht wird. Dieser Motor besteht im wesentlichen aus einem Stator, einem als Außenläufer ausgebildeten Rotor und einer zwischen Stator und Rotor angeordneten vormontierten Baugruppe. Diese Baugruppe setzt sich dabei im wesentlichen aus der die Schaltungsanordnung für die Kommutierung der Statorwicklungen tragenden Leiterplatte, einem scheibenförmigen Kühlkörper und einem diese beiden Teile verbindenden ringförmigen Trägerelement zusammen. Dabei erweist es sich als nachteilig, daß für die Bestückung der Leiterplatte mehrere Lötvorgänge erforderlich sind. Da beispielsweise die Hallgeneratoren nicht durch ein Lötbad geführt werden dürfen, muß deren nachträgliche Bestückung in einem anschließenden Lötvorgang per Hand erfolgen. Hierfür müssen die Lötaugen der Leiterplatte im Bereich des bzw. der zu montierenden Hallgeneratoren vor dem ersten Lötvorgang abgedeckt werden. Eine derartige, teilweise von Hand zu tätigende Fertigung ist jedoch recht zeit- und kostenintensiv. Weiterhin erweist es sich als nachteilig, daß die vormontierte Baugruppe im wesentlichen im Inneren des Motors angeordnet ist, wobei die Baugruppe über den ringscheibenförmigen Kühlkörper auf der Innenseite des Statorflansches befestigt ist und so lediglich eine indirekte Abgabe der entstehenden Wärme über den Kühlkörper und den Statorflansch möglich ist.

Der vorliegenden Erfindung liegt die Aufgabe zugrunde, einen gattungsgemäßen Motor zu schaffen, der bei guten Kühleigenschaften eine deutlich vereinfachte Fertigung des Motors gewährleistet.

Erfindungsgemäß wird das dadurch erreicht, daß das Elektronikmodul einen an der Leiterplatte in deren umfänglichem Randbereich befestigten, hohlzylindrischen Kühlkörper aufweist, an dessen innerer Zylinderwandung die Leistungshalbleiter wärmeleitend angeordnet sind, und daß die Zylinderwandung im montierten Zustand des Motors einen Teil des Umfangsrandes des Statorflansches bildet. Um die Fertigung eines derartigen Motors weiter zu vereinfachen bzw. zu automatisieren, ist für die Befestigung des bzw. jedes Hallgenerators auf der Leiterplatte erfindungsgemäß ein Anschlußteil vorgesehen. Dieses Anschlußteil dient der elektrischen Verbindung zwischen Hallgenerator und Leiterplatte und kann in einem gemeinsamen Lötvorgang mit allen anderen elektronischen Bauelementen verlötet werden. Somit ist es erfindungsgemäß möglich, eine Baugruppe, bestehend aus vorbestückter Leiterplatte und einem an dieser umfänglich befestigten, die Leistungshalbleiter tragenden Kühlkörper vorzumontieren und diese anschließend komplett durch ein Lötbad zu führen. So können alle Bauteile in einem einzigen Lötvorgang verlötet werden. Anschließend muß lediglich der bzw. jeder Hallgenerator auf das bzw. jedes mitverlötete Anschlußteil aufgesteckt werden. Das Anschlußteil kann aus einzelnen Kontakthülsen bestehen, die in der Leiterplatte verlötet werden, und in die der jeweilige Hallgenerator mit seinen Anschlußbeinen elektrisch leitend eingesteckt und hierdurch fixiert wird.

Weitere vorteilhafte Ausführungen der Erfindung sind in den Unteransprüchen und in der nachfolgenden Figurenbeschreibung enthalten. Es zeigen:
- Fig. 1: einen Axialschnitt durch einen erfindungsgemäßen Motor,
- Fig. 2: eine Ansicht auf die Motorflanschseite des erfindungsgemäßen Motors in Pfeilrichtung II gemäß Fig. 1 mit teilweise weggeschnittenem Motorflansch,
- Fig. 3: eine Draufsicht aus Richtung der Flanschseite auf einen erfindungsgemäßen Kühlkörper,
- Fig. 4: einen Schnitt durch den Kühlkörper längs der Linie IV-IV in Fig. 3,
- Fig. 5: einen Schnitt durch den Kühlkörper längs der Linie V-V in Fig. 3,
- Fig. 6 bis 9: ein erfindungsgemäßes Befestigungselement für die Befestigung der Leistungshalbleiter am Kühlkörper in verschiedenen Ansichten,
- Fig. 10: einen Schnitt längs der Linie X-X in Fig. 2,
- Fig. 11: einen Schnitt längs der Linie XI-XI in Fig. 2,
- Fig. 12: eine vergrößerte Teilansicht eines Bereiches gemäß Fig. 1,
- Fig. 13: eine Draufsicht auf die statorseitige Isolierendscheibe des Motors.

In den verschiedenen Figuren der Zeichnung sind gleiche und sich funktionell entsprechende Teile stets mit denselben Bezugszeichen versehen.

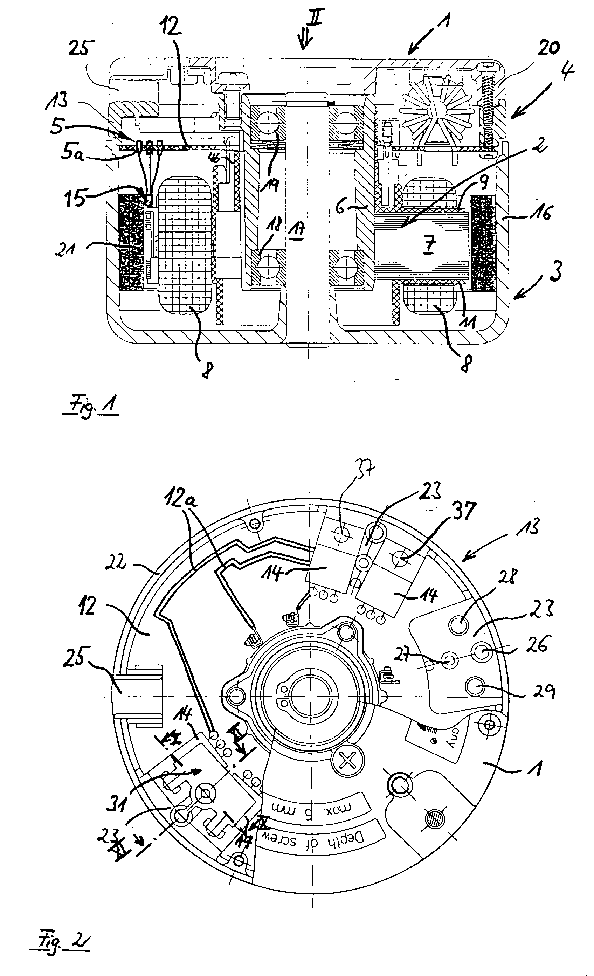

Die Fig. 1 zeigt einen erfindungsgemäßen kollektorlosen Gleichstrom-Außenläufermotor in einem Axialschnitt. Der Motor besteht im wesentlichen aus einem Statorflansch 1, einem an diesem befestigten Stator 2, einem den Stator 2 auf seiner dem Statorflansch 1 abgekehrten Seite umschließenden Außenläufer 3 sowie einem zwischen dem Statorflansch 1 und dem Außenläufer 3 angeordneten Elektronikmodul 4. Der Statorflansch 1 ist über ein Lagertragrohr 6 mit dem Stator 2 verbunden. Der Stator 2 besteht in herkömmlicher Weise im wesentlichen aus einem Statorblechpaket 7 sowie verschiedenen Statorwicklungen 8, die mittels einer statorseitigen und einer rotorseitigen Isolierendscheibe 9,11 gegenüber dem Statorblechpaket 7 isoliert sind. Für die Montage wird der Stator 2 mit seinem Statorblechpaket 7 auf das Lagertragrohr 6 aufgeschoben und mit diesem vorzugsweise verpreßt. Das den Stator 2 tragende Lagertragrohr 6 ist an seiner dem Statorflansch 1 zugekehrten Seite mit diesem verbunden, vorzugsweise verschraubt. Zwischen dem Stator 2 und dem Statorflansch ist das Elektronikmodul 4 angeordnet. Das Elektronikmodul 4 besteht im wesentlichen aus einer Leiterplatte 12, auf der die elektronische Schaltungsanordnung für die Kommutierung der Statorwicklungen 8 angeordnet ist sowie einem hohlzylindrischen Kühlkörper 13 insbesondere aus Aluminium-Druckguß, der der Lagerung und Kühlung von Leistungshalbleitern 14 dient. Erfindungsgemäß ist auf der Leiterplatte 12 ein Anschlußteil 5 für die elektrische Verbindung eines Hallgenerators 15 mit der Leiterplatte 12 angeordnet. Das Anschlußteil 5 besteht bevorzugt aus einzelnen (insbesondere drei) Kontakthülsen 5a, die - zusammen mit anderen elektronischen Bauelementen - mit der Leiterplatte 12 bzw. mit Leiterbahnen 12a verlötet sind. Der Hallgenerator 15 besitzt üblicherweise drei Anschlußbeine, die zum elektrischen Anschluß in die Kontakthülsen eingesteckt sind (siehe Fig. 1).

Der Außenläufer 3 besteht in bekannter Weise aus einem glockenartigen, den Stator 2 umschließenden Rotorgehäuse 16, das über eine Rotorachse 17 in Kugellagern 18, 19, die jeweils endseitig im Lagertragrohr 6 eingepreßt sind, gelagert ist. Auf der Innenseite des Rotorgehäuses 16 ist ein Dauermagnet 21 angeordnet, der das Statorblechpaket 7 in Rotationsrichtung umschließt.

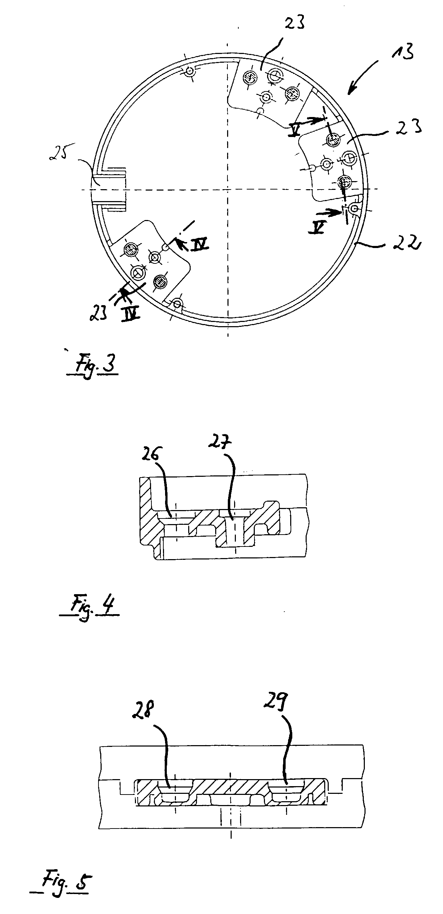

In Fig. 2 ist eine Ansicht auf die äußere, dem Stator 2 abgekehrte Statorflanschseite des erfindungsgemäßen Motors dargestellt, wobei Teilbereiche des Statorflansches 1 weggeschnitten sind. Gemäß Fig. 1 und 2 hat der Kühlkörper 13 im wesentlichen den gleichen Außendurchmesser wie der Statorflansch 1 bzw. das Rotorgehäuse 16. Der Kühlkörper 13 besteht aus einer Zylinderwandung 22 sowie mehreren, radial nach innen gerichteten Halteelementen 23. Dabei bildet die Zylinderwandung 22 erfindungsgemäß einen Teil eines sich in axialer Richtung erstreckenden Umfangsrandes 20 des Statorflansches 1, wobei die Zylinderwandung 22 auf ihrer dem Rotorgehäuse 16 zugekehrten Seite stirnseitig mit der Leiterplatte 12 verbunden, insbesondere verschraubt ist und auf ihrer gegenüberliegenden Stirnseite mit dem Statorflansch 1 verschraubt ist. Des weiteren weist der Kühlkörper 13 in seiner Zylinderwandung 22 vorzugsweise eine Aussparung 25 für die Zufuhr der Motoranschlußleitungen auf. Die Halteelemente 23 dienen der kraft- und/oder formschlüssigen Halterung der Leistungshalbleiter 14, wobei diese dann wärmeleitend und elektrisch isoliert mit den Halteelementen 23 des Kühlkörpers 13 in Verbindung stehen. Um die einerseits wärmeleitende und andererseits elektrisch isolierende Verbindung zwischen den Leistungshalbleitern 14 und den Halteelementen 23 zu gewährleisten, ist zwischen diesen beiden Teilen 14, 23 jeweils eine elektrisch isolierende Wärmeleitfolie 24 angeordnet (siehe Fig. 10 und 11). In der dargestellten Ausführungsform sind die Halteelemente 23 vorzugsweise laschenartig ausgebildet, wobei jedes Halteelement 23 derart ausgebildet ist, daß pro Halteelement 23 zwei Leistungshalbleiter 14 befestigbar sind. Im dargestellten Ausführungsbeispiel weist jedes Halteelement 23 vorzugsweise zwei Durchgangsöffnungen 26, 27 sowie zwei Sacklöcher 28, 29 auf. Die Durchgangsöffnungen 26, 27 und die Sacklöcher 28, 29 dienen insbesondere der Befestigung der Leistungshalbleiter 14. Hierfür werden die Leistungshalbleiter 14 auf die Halteelemente 23 aufgelegt und mit Hilfe von speziell geformten Befestigungselementen 31 auf den Halteelementen 23 befestigt. In Fig. 2 ist ein erfindungsgemäßer Kühlkörper 13 mit drei Halteelementen 23 dargestellt, wobei ein Halteelement 23 ohne Leistungshalbleiter 14 und Befestigungselement 21, ein Halteelement 23 mit Leistungshalbleitern 14, aber ohne Befestigungselement 31, und ein Halteelement 23 mit montierten Leistungshalbleitern 14 und Befestigungselement 31 dargestellt sind.

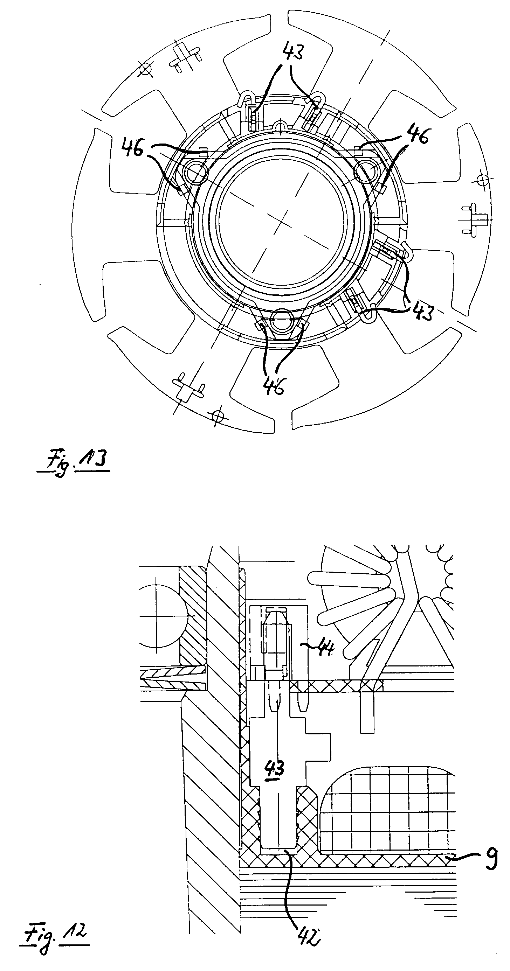

Eine mögliche Ausführungsform eines derartigen Befestigungselementes 31 ist in den Fig. 6 bis 9 dargestellt. Das insbesondere aus einem Thermoplast gefertigte Befestigungselement 31 besteht im wesentlichen aus einer - im montierten Zustand des Befestigungselementes 31 gesehen - parallel zu dem laschenartigen Halteelement 23 angeordneten Deckelplatte 32, zwei sich von dieser in Richtung der Halteelemente 23 erstreckenden Positionierarmen 33, 34, einem sich ebenfalls in Richtung des Halteelementes 23 erstreckenden Montagezapfen 35 und einem sich wiederum in Richtung des Halteelementes 23 durch die Durchgangsöffnung 26 erstrekkenden Haltezapfen 36 für die Halterung der Leiterplatte 12.

Für die Befestigung eines bzw. zweier Leistungshalbleiter 14 auf einem Halteelement 23 werden die Leistungshalbleiter 14 auf das Halteelement 23 in Umfangsrichtung gesehen nebeneinander aufgelegt und mit Hilfe des Befestigungselementes 31 form- und/oder kraftschlüssig auf dem Halteelement 23 gehalten. Hierfür durchgreifen die beiden Positionierarme 33,34 des Befestigungselementes 31 Befestigungslöcher 37 der Leistungshalbleiter 14 und greifen mit ihren der Deckelplatte 32 abgekehrten Enden in die Sacklöcher 28,29 des Halteelementes 23 ein (Fig. 10). Dabei weisen die Positionierarme 33, 34 vorzugsweise seitliche Ansätze 38,39 auf, die die Leistungshalbleiter 14 in montierter Position an die Auflagefläche des Halteelementes 23 andrücken. Gleichzeitig greift in der montierten Stellung einerseits der Montagezapfen 35 bereichsweise in die Durchgangsöffnung 27 des Halteelementes 23 ein, während der Haltezapfen 36 durch die Durchgangsöffnung 26 des Halteelementes 23 hindurchgeführt wird (Fig. 11).

Dabei ist die Durchgangsöffnung 27 vorzugsweise als Stufenbohrung ausgebildet, so daß der Montagezapfen 35 im montierten Zustand auf der Stufe der Durchgangsöffnung 27 aufliegt, so daß ein genau definierter Abstand zwischen der Deckelplatte 32 des Befestigungselementes 31 und der Auflagefläche des Halteelementes 23 gewährleistet ist. Durch den vorstehend beschriebenen Eingriff des Montagezapfens 35 in die Stufenbohrung 27 wird im Stufenbereich sichergestellt, daß ausreichende Kriechstromabstände zwischen dem unteren metallischen Leistungshalbleiterteil und der Auflagefläche des Halteelementes 23 eingehalten werden.

Weiterhin weisen die Deckelplatten 32 der Befestigungselemente 31 auf ihrer den Leistungshalbleitern 14 zugekehrten Fläche sich in Richtung der Leistungshalbleiter 14 erstreckende Andruckflächen 40 auf. Die Andruckflächen 40 bewirken im montierten Zustand der Befestigungselemente 31 einen zusätzlichen Druck auf die Leistungshalbleiter 14, so daß eine gute wärmeleitende Verbindung zwischen den Leistungshalbleitern 14 und den Halteelementen 23 des Kühlkörpers 13 gewährleistet ist.

Die Durchgangsöffnung 26 ist vorzugsweise auf ihrer dem Leistungshalbleiter 14 zugekehrten Seite derart erweitert bzw. angesenkt, so daß sie eine Führung für einen am Haltezapfen 36 angeordneten Rastnocken 41 bildet. Das den Rastnocken 41 aufweisende Ende des Haltezapfens 36 ist vorzugsweise geschlitzt, so daß der Rastnocken 41 federelastisch spreizbar ist. Im montierten Zustand der Leistungshalbleiter 14 durchgreift der Haltezapfen 36 des Befestigungselementes 31 die Durchgangsöffnung 26 des Halteelementes 23 und hintergreift mit einem Rastnocken 41 eine am Außenrand der Leiterplatte 12 befindliche Öffnung (Fig. 10 und 11), so daß eine Befestigung der Leiterplatte 12 am Kühlkörper 13 gewährleistet ist. Zusätzlich oder alternativ zu dieser Rastverbindung zwischen dem Kühlkörper 13 und der Leiterplatte 12 ist eine Verschraubung der beiden Teile (12,13) vorgesehen. Hierfür ist die Leiterplatte 12 in ihrem Randbereich auf der dem Rotorgehäuse 16 zugekehrten Stirnseite mit der Zylinderwandung 22 des Kühlkörpers 13 verschraubt (Fig. 1).

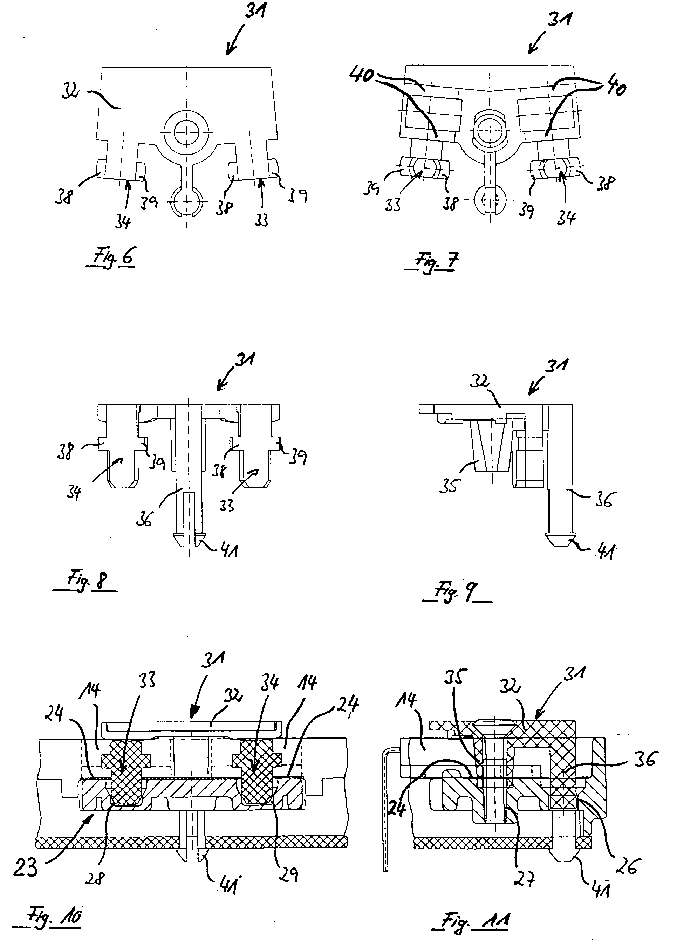

In der Fig. 4 ist das Halteelement 23 des Kühlkörpers 13 in einem Schnitt in radialer Richtung dargestellt. Hier sind die beiden in radialer Richtung hintereinander angeordneten Durchgangsöffnungen 26 und 27 des Halteelementes 23 gezeigt. Die Durchgangsöffnung 27 dient neben der Aufnahme des Montagezapfens 35 in ihrem ersten Teil der Stufenbohrung der Befestigung des Befestigungselementes 31 mittels einer zusätzlichen Schraube oder dergleichen. Hierfür kann die Durchgangsöffnung 27 im Bereich des engeren Teils der Stufenbohrung mit einem Gewinde versehen sein. Andererseits ist es möglich, die Durchgangsöffnung 27 ohne Gewinde auszuführen und in ihrem Durchmesser an eine gewindeschneidende Schraube anzupassen.

Ferner zeigt die Fig. 12 eine vergrößerte Teilansicht eines Ausschnittes gemäß Fig. 1. Hier ist ein Teilbereich der statorseitigen Isolierendscheibe 9 dargestellt, die über ihren Umfang verteilt mehrere statorseitig offene Aufnahmen 42 aufweist. Die Aufnahmen 42 dienen der Befestigung von Anschlußstiften 43, die einerseits dem Anschluß von Drahtenden der Statorwicklungen 8 und andererseits der insbesondere steckbaren elektrischen Verbindung der Statorwicklungen 8 mit der Leiterplatte 12 dienen. Hierzu greift jeder Anschlußstift 43 mit seinem der Isolierendscheibe 9 abgekehrten Ende durch Öffnungen der Leiterplatte 12 hindurch in auf dieser angeordnete Steckkontakte 44 ein. Für die zusätzliche Halterung der Leiterplatte 12 bzw. des Elektronikmoduls 4 weist die statorseitige Isolierendscheibe 9 über ihren Umfang verteilt sich in Richtung Leiterplatte 12 durch diese hindurch erstreckende Rastarme 46 auf.

Die Fig. 13 zeigt eine Ansicht auf die statorseitige Isolierendscheibe 9 mit in den Aufnahmeöffnungen 42 gehalterten Anschlußstiften 43. Ferner sind die umfänglich vorzugsweise gleichmäßig verteilt angeordneten Rastarme 46 in Draufsicht erkennbar.

## Patentansprüche

1. Kollektorloser Gleichstromaußenläufermotor, bestehend aus einem an einem Statorflansch (1) befestigten Stator (2) mit Statorwicklungen (8), einem den Stator (2) auf seiner dem Statorflansch (1) abgekehrten Seite umschließenden Außenläufer (3) sowie einem zwischen dem Statorflansch (1) und dem Außenläufer (3) angeordneten Elektronikmodul (4) mit einer elektronischen, die Statorwicklungen (8) ansteuernden Schaltungsanordnung mit einer flanschseitig dem Stator (2) zugekehrt angeordneten, elektronische Bauelemente tragenden Leiterplatte (12) sowie räumlich getrennt von der Leiterplatte (12) angeordneten, mit dieser elektrisch leitend verbundenen Leistungshalbleitern (14), wobei der Statorflansch (1) einen sich in axialer Richtung erstrekkenden Umfangsrand (20) aufweist,
**dadurch gekennzeichnet,** daß das Elektronikmodul (4) einen an der Leiterplatte (12) in deren umfänglichem Randbereich befestigten, hohlzylindrischen Kühlkörper (13) aufweist, an dessen innerer Zylinderwandung (22) die Leistungshalbleiter (14) wärmeleitend angeordnet sind, und daß die Zylinderwandung (22) im montierten Zustand des Motors einen Teil des Umfangsrandes (20) des Statorflansches (1) bildet.

2. Kollektorloser Elektromotor nach Anspruch 1,
**dadurch gekennzeichnet,** daß der Kühlkörper (13) an seiner inneren Zylinderwandung (22) mehrere radial nach innen gerichtete Halteelemente (23) aufweist.

3. Kollektorloser Elektromotor nach Anspruch 2,
**dadurch gekennzeichnet,** daß die Halteelemente (23) laschenartig ausgebildet sind.

4. Kollektorloser Elektromotor nach Anspruch 2 oder 3,
**dadurch gekennzeichnet,** daß die Halteelemente (23) derart ausgebildet sind, daß pro Halteelement (23) zwei Leistungshalbleiter (14) befestigbar sind.

5. Kollektorloser Elektromotor nach einem der Ansprüche 2 bis 4,
**dadurch gekennzeichnet,** daß zwischen den Halteelementen (23) und den Leistungshalbleitern (14) eine elektrisch isolierende Wärmeleitfolie (24) angeordnet ist.

6. Kollektorloser Elektromotor nach einem der Ansprüche 2 bis 5,
**dadurch gekennzeichnet,** daß die Leistungshalbleiter (14) mit Befestigungselementen (31) auf den Halteelementen (23) kraft- und/oder formschlüssig befestigt sind.

7. Kollektorloser Elektromotor nach einem der Ansprüche 2 bis 6,
**dadurch gekennzeichnet,** daß die Befestigungselemente (31) aus einer parallel zu einer Auflagefläche der Halteelemente (23) angeordneten Deckelplatte (32) mindestens einem, vorzugsweise zwei sich von der Deckelplatte (32) in Richtung Halteelement (23) erstreckenden Positionierarmen (33, 34) und einem hülsenartigen Montagezapfen (35) bestehen.

8. Kollektorloser Elektromotor nach Anspruch 7,
**dadurch gekennzeichnet,** daß die Befestigungselemente (31) unter Einschluß der Leistungshalbleiter (14) auf den Halteelementen (23) verschraubt sind.

9. Kollektorloser Elektromotor nach Anspruch 7 oder 8,
**dadurch gekennzeichnet,** daß die Positionierarme (33,34) der Befestigungselemente (31) seitliche, radial nach außen weisende Ansätze (38,39) aufweisen, die die Leistungshalbleiter (14) im montiertem Zustand an die Auflagefläche der Halteelemente (23) andrücken.

10. Kollektorloser Elektromotor nach einem der Ansprüche 6 bis 9,
**dadurch gekennzeichnet,** daß die Befestigungselemente (31) mindestens einen Haltezapfen (36) für die kraft- und/oder formschlüssige Befestigung der Leiterplatte (12) an dem Kühlkörper (13) aufweisen.

11. Kollektorloser Elektromotor nach einem der Ansprüche 1 bis 10,
**dadurch gekennzeichnet,** daß die Leiterplatte (12) auf der dem Rotorgehäuse (16) zugekehrten Stirnseite des Kühlkörpers (13) mit diesem verschraubt ist.

12. Kollektorloser Elektromotor nach einem der Ansprüche 1 bis 11,
**dadurch gekennzeichnet,** daß der Kühlkörper (13) auf seiner dem Statorflansch (1) zugekehrten Stirnseite mit diesem verschraubt ist.

13. Kollektorloser Elektromotor nach einem der Ansprüche 1 bis 12,
**dadurch gekennzeichnet,** daß der Stator (2) eine statorflanschseitige und eine rotorseitige Isolierendscheibe (9, 11) aufweist, wobei die statorflanschseitige Isolierendscheibe (9) mehrere statorflanschseitig offene Aufnahmen (42) für die Befestigung von Anschlußstiften (43) aufweist.

14. Kollektorloser Elektromotor nach Anspruch 13,
**dadurch gekennzeichnet,** daß die Anschlußstifte (43) einendig in den Aufnahmen der Isolierendscheibe (9) befestigt sind und ihr anderes Ende als zungenartiges Steckerteil ausgebildet ist, das durch Öffnungen in der Leiterplatte (12) in auf dieser angeordnete Steckkontakte (44) eingreift und jeder Anschlußstift (43) einen Fortsatz für den Anschluß der Statorwicklungsdrahtenden aufweist.

15. Kollektorloser Elektromotor nach Anspruch 13 oder 14,
**dadurch gekennzeichnet,** daß die statorflanschseitige Isolierendscheibe (9) mehrere über ihren Umfang verteilt angeordnete, sich axial in Richtung Statorflansch (1) erstreckende Rastarme (46) aufweist, die in Öffnungen der Leiterplatte (12) eingreifen und diese kraft- und/oder formschlüssig fixieren.

16. Kollektorloser Elektromotor nach einem der Ansprüche 1 bis 15,
**dadurch gekennzeichnet,** daß die Leiterplatte (12) mindestens ein Anschlußteil (5) für die elektrisch leitende Verbindung eines Hallgenerators (15) mit der Leiterplatte (12) aufweist, wobei das Anschlußteil (5) vorzugsweise aus einzelnen mit der Leiterplatte (12) verlöteten Kontakthülsen (5a) besteht, in die der Hallgenerator (15) mit seinen Anschlußbeinen eingesteckt ist.

17. Kollektorloser Elektromotor nach einem der Ansprüche 1 bis 16,
**dadurch gekennzeichnet,** daß der Kühlkörper (13) in seiner Zylinderwandung (22) eine Aussparung (25) für die Zufuhr der Motoranschlußleitung aufweist.

## Claims

1. DC external-rotor motor without a commutator, comprising a stator (2) which is mounted on a stator flange (1) and has stator windings (8), an external rotor (3) which encloses the stator (2) on its side facing away from the stator flange (1), as well as an electronics module (4) which is arranged between the stator flange (1) and the external rotor (3) and has an electronic circuit arrangement which drives the stator windings (8) and has a printed circuit board (12) which is arranged facing the stator (2) on the flange side and is fitted with electronic components as well as power semiconductors (14) which are separated from the printed circuit board (12) and are electrically conductively connected to it, wherein the stator flange (1) has a circumferential rim (20) which extends in the axial direction,
characterized in that the electronics module (4) has a hollow-cylindrical heat sink (13) which is attached to the printed circuit board (12) in its circumferential rim region and on whose inner cylinder wall (22) the power semiconductors (14) are arranged in a thermally conductive manner, and in that, when the motor is assembled, the cylinder wall (22) forms a part of the circumferential rim (20) of the stator flange (1).

2. Electric motor without a commutator according to Claim 1,
characterized in that, on its inner cylinder wall (22), the heat sink (13) has a plurality of retaining elements (23) which point radially inwards.

3. Electric motor without a commutator according to Claim 2,
characterized in that the retaining elements (23) are designed like lugs.

4. Electric motor without a commutator according to Claim 2 or 3,
characterized in that the retaining elements (23) are designed in such a manner that two power semiconductors (14) can be attached per retaining element (23).

5. Electric motor without a commutator according to one of Claims 2 to 4,
characterized in that an electrically insulating thermally conductive film (24) is arranged between the retaining elements (23) and the power semiconductors (14).

6. Electric motor without a commutator according to one of Claims 2 to 5,
characterized in that the power semiconductors (14) are mounted by attachment elements (31) on the retaining elements (23) with a force-fit and/or a positive lock.

7. Electric motor without a commutator according to one of Claims 2 to 6,
characterized in that the attachment elements (31) comprise a cover plate (32) which is arranged parallel to a contact surface of the retaining elements (23) and has at least one, and preferably two, positioning arms (33, 34) (which extend from the cover plate (32) in the direction of the retaining element (23)) and a sleeve-like mounting pin (35).

8. Electric motor without a commutator according to Claim 7,
characterized in that the attachment elements (31) are screwed on the retaining elements (23), enclosing the power semiconductors (14).

9. Electric motor without a commutator according to Claim 7 or 8,
characterized in that the positioning arms (33, 34) of the attachment elements (31) have side attachments (38, 39) which point radially outwards and, when assembled, press the power semiconductors (14) against the contact surface of the retaining elements (23).

10. Electric motor without a commutator according to one of Claims 6 to 9,
characterized in that the attachment elements (31) have at least one retaining pin (36) in order to attach the printed circuit board (12) to the heat sink (13) with a force fit and/or a positive lock.

11. Electric motor without a commutator according to one of Claims 1 to 10,
characterized in that the printed circuit board (12) is screwed to the heat sink (13) on the end face of said heat sink (13) which faces the rotor housing (16).

12. Electric motor without a commutator according to one of Claims 1 to 11,
characterized in that the heat sink (13) is screwed to the stator flange (1) on its end face which faces the stator flange (1).

13. Electric motor without a commutator according to one of Claims 1 to 12,
characterized in that the stator (2) has an insulating end disc (9) on the stator flange side and an insulating end disc (11) on the rotor side, wherein the insulating end disc (9) on the stator flange side has a plurality of receptacles (42), which are open on the stator flange side, for the attachment of connecting pins (43).

14. Electric motor without a commutator according to Claim 13,
characterized in that the connecting pins (43) are mounted at one end in the receptacles in the insulating end disc (9), and the other end is designed as a tongue-like plug part, which engages through openings in the printed circuit board (12) in plug contacts (44) arranged on this printed circuit board (12), and each connecting pin (43) has a projection for the connection of the stator winding wire ends.

15. Electric motor without a commutator according to Claim 13 or 14,
characterized in that the insulating end disc (9) on the stator flange side has a plurality of latching arms (46) which are arranged distributed over its circumference, extend axially in the direction of the stator flange (1), engage in openings in the printed circuit board (12), and fix said printed circuit board (12) with a force fit and/or a positive lock.

16. Electric motor without a commutator according to one of Claims 1 to 15,
characterized in that the printed circuit board (12) has at least one connecting part (5) for electrically conductively connecting a Hall generator (15) to the printed circuit board (12), wherein the connecting part (5) preferably comprises individual contact sleeves (5a) which are soldered to the printed circuit board (12) and into which the connecting legs of the Hall generator (15) are inserted.

17. Electric motor without a commutator according to one of Claims 1 to 16,
characterized in that, in its cylinder wall (22), the heat sink (13) has a cutout (25) for the supply of the motor connecting cable.

## Revendications

1. Moteur sans collecteur à rotor extérieur, à courant continu, composé d'un stator (2) fixé à un flasque de stator (1) et possédant des enroulements de stator (8), un rotor extérieur (3) qui entoure le stator (2) sur son côté qui est à l'opposé du flasque de stator (1) ainsi qu'un module électronique (4) disposé entre le flasque de stator (1) et le rotor extérieur (3), et qui comprend un montage électronique commandant les enroulements de stator (8) et comprenant lui-même un circuit imprimé (12) portant des composants électroniques, disposé dirigé vers le stator (2), côté flasque, ainsi que des semi-conducteurs de puissance (14) disposés séparément du circuit imprimé (12) et connectés électriquement à ce circuit, le flasque (1) du stator présentant un bord périphérique (20) qui s'étend dans la direction axiale, caractérisé en ce que le module électronique (4) présente un dissipateur de chaleur cylindrique creux (13), fixé au circuit imprimé (12) dans la région de bord périphérique de ce denier, et le long de la paroi cylindrique intérieure (22) duquel les semi-conducteurs de puissance (14) sont disposés de façon à transmettre la chaleur, et en ce qu'à l'état monté du moteur, la paroi cylindrique (22) forme une partie du bord périphérique (20) du flasque (1) du stator.

2. Moteur électrique sans collecteur selon la revendication 1, caractérisé en ce que le dissipateur de chaleur (13) présente sur sa paroi cylindrique intérieure (22), plusieurs éléments de retenue (23) dirigés radialement vers l'intérieur.

3. Moteur électrique sans collecteur selon la revendication 2, caractérisé en ce que les éléments de retenue (23) sont en forme de pattes.

4. Moteur électrique sans collecteur selon la revendication 2 ou 3, caractérisé en ce que les éléments de retenue (23) sont réalisés de manière que deux semi-conducteurs de puissance (14) puissent être fixés à chaque élément de retenue (23).

5. Moteur électrique sans collecteur selon une des revendications 2 à 4, caractérisé en ce qu'une pellicule (24) conductrice de la chaleur et isolante de l'électricité est disposée entre les éléments de retenue (23) et les semi-conducteurs de puissance (14).

6. Moteur électrique sans collecteur selon une des revendications 2 à 5, caractérisé en ce que les semi-conducteurs de puissance (14) sont fixés sur les éléments de retenue (23) à l'aide d'éléments de fixation (31) en formant une liaison par action de force et/ou par sûreté de forme.

7. Moteur électrique sans collecteur selon une des revendications 2 à 6, caractérisé en ce que les éléments de fixation (31) sont composés d'une plaque de couvercle (32) disposée parallèlement à une surface d'appui des éléments de retenue (23), d'au moins un, de préférence deux, bras de positionnement (33, 34) qui partent de la plaque de couvercle (32) en direction de l'élément de retenue (23), et d'un téton de montage (35) en forme de douille.

8. Moteur électrique sans collecteur selon la revendication 7, caractérisé en ce que les éléments de fixation (31) sont vissés sur les éléments de retenue (23) avec inclusion des semi-conducteurs de puissance (14).

9. Moteur électrique sans collecteur selon la revendication 7 ou 8, caractérisé en ce que les bras de positionnement (33, 34) des éléments de fixation (31) présentent des prolongements latéraux (38, 39) dirigés radialement vers l'extérieur, qui pressent les semi-conducteurs de puissance (14) contre la surface d'appui des éléments de retenue (23) à l'état monté.

10. Moteur électrique sans collecteur selon une des revendications 6 à 9, caractérisé en ce que les éléments de fixation (31) présentent au moins un téton de retenue (36) pour la fixation, par action de force et/ou par sûreté de forme, du circuit imprimé (12) sur le dissipateur de chaleur (13).

11. Moteur électrique sans collecteur selon une des revendications 1 à 10, caractérisé en ce que le circuit imprimé (12) est vissé sur la surface frontale du dissipateur de chaleur (13) qui est dirigée vers la carcasse (16) du rotor pour y être ainsi fixé.

12. Moteur électrique sans collecteur selon une des revendications 1 à 11, caractérisé en ce que le dissipateur de chaleur (13) est vissé sur le flasque (1) du stator, par sa face frontale dirigée vers ce flasque.

13. Moteur électrique sans collecteur selon une des revendications 1 à 12, caractérisé en ce que le stator (2) présente des disques d'extrémité isolants (9, 11) sur le côté du flasque du stator et sur le côté du rotor, le disque d'extrémité isolant (9) du côté du flasque du stator présentant plusieurs logements (42) ouverts sur le côté du flasque du stator, pour la fixation de broches de connexion (43).

14. Moteur électrique sans collecteur selon la revendication 13, caractérisé en ce que les broches de connexion (43) sont fixées, à une extrémité, dans les logements du disque d'extrémité isolant (9) tandis que leur autre extrémité forme une partie mâle en forme de languette, qui est engagée à travers des ouvertures du circuit imprimé (12), dans des contacts à broches (44) disposés sur ce circuit, et chaque broche de connexion (43) présente un prolongement pour la connexion des extrémités des fils des enroulements du stator.

15. Moteur électrique sans collecteur selon la revendication 13 ou 14, caractérisé en ce que le disque d'extrémité isolant (9) du côté du flasque du stator présente plusieurs bras de verrouillage (46) répartis sur sa périphérie, qui s'étendent axialement en direction du flasque (1) du stator, et qui s'engagent dans des ouvertures du circuit imprimé (12) et fixent ce dernier par action de force et/ou par sûreté de forme.

16. Moteur électrique sans collecteur selon une des revendications 1 à 15, caractérisé en ce que le circuit imprimé (12) présente au moins un élément de connexion (5) pour la liaison conductrice de l'électricité d'un générateur Hall (15) avec le circuit imprimé (12), l'élément de connexion (5) étant de préférence composé de différents connecteurs femelles (5a) soudés au circuit imprimé (12), dans lesquels le générateur Hall (15) est embroché par ses pieds de connexion.

17. Moteur électrique sans collecteur selon une des revendications 1 à 16, caractérisé en ce que le dissipateur de chaleur (13) présente dans sa paroi cylindrique (22) un évidement (25) pour l'amenée de la ligne de connexion du moteur.
